**Europäisches Patentamt**

**European Patent Office**

**Office européen des brevets**

(19)

(11) Veröffentlichungsnummer: **0 259 551**
**B1**

(12) **EUROPÄISCHE PATENTSCHRIFT**

(45) Veröffentlichungstag der Patentschrift:
**19.09.90**

(51) Int. Cl.⁵: **E03C 1/10, F16K 37/00**

(21) Anmeldenummer: **87109071.8**

(22) Anmeldetag: **24.06.87**

(54) **Rohrtrennung mit einer Sperreinrichtung und eine Überwachungseinrichtung für die Sperreinrichtung.**

(30) Priorität: **08.08.86 DE 3626825**

(43) Veröffentlichungstag der Anmeldung:
**16.03.88 Patentblatt 88/11**

(45) Bekanntmachung des Hinweises auf die Patenterteilung:
**19.09.90 Patentblatt 90/38**

(84) Benannte Vertragsstaaten:
**AT CH DE FR IT LI NL**

(56) Entgegenhaltungen:
**EP-A- 0 182 004**
**EP-A- 0 189 499**
**WO-A-86/07400**
**DE-A- 2 643 038**
**DE-A- 3 247 325**
**GB-A- 533 866**

(73) Patentinhaber: **Grünbeck Wasseraufbereitung GmbH,
Industriestrasse 1, D-8884 Höchstädt/Donau(DE)**

(72) Erfinder: **Michl, Josef Peter, Etter 6,
D-8886 Wittislingen(DE)**

(74) Vertreter: **Prüfer, Lutz H., Dipl.-Phys., Harthauser
Strasse 25d, D-8000 München 90(DE)**

ACTORUM AG

## Beschreibung

Die Erfindung betrifft einen Rohrtrenner mit den Merkmalen des ersten Teils von Anspruch 1 bzw. Anspruch 2.

Ein solcher Rohrtrenner ist beispielsweise aus der EPA O 189 499 bekannt. Bei diesem bekannten Rohrtrenner ist eine Funktionsprüfung dadurch möglich, daß mittels eines Magnetventiles die Sperreinrichtung so beaufschlagt wird, daß sie von der Durchflußstellung in die Trennstellung bewegt wird.

Ferner ist aus der DEA 2 643 038 ein Ventil bekannt, bei dem die Ventilstellung mittels eines Näherungsschalters abtastbar ist.

Es ist Aufgabe der Erfindung, einen Rohrtrenner der oben genannten Art so auszubilden, daß auf einfache Weise eine Überwachung der Funktionsfähigkeit möglich ist. Diese Aufgabe wird durch einen Rohrtrenner gelöst, der die Merkmale des Anspruches 1 bzw. alternativ die Merkmale des Anspruches 2 aufweist.

Weiterbildung der Erfindung sind in den Unteransprüchen beschrieben.

Weitere Merkmale und Zweckmäßigkeiten der Erfindung ergeben sich aus der Beschreibung von Ausführungsbeispielen anhand der Figuren. Von den Figuren zeigen:

Fig. 1 einen Schnitt durch einen Rohrtrenner und
Fig. 2 eine teilweise geschnittene Darstellung entlang der Linie II-II in Fig. 1; und

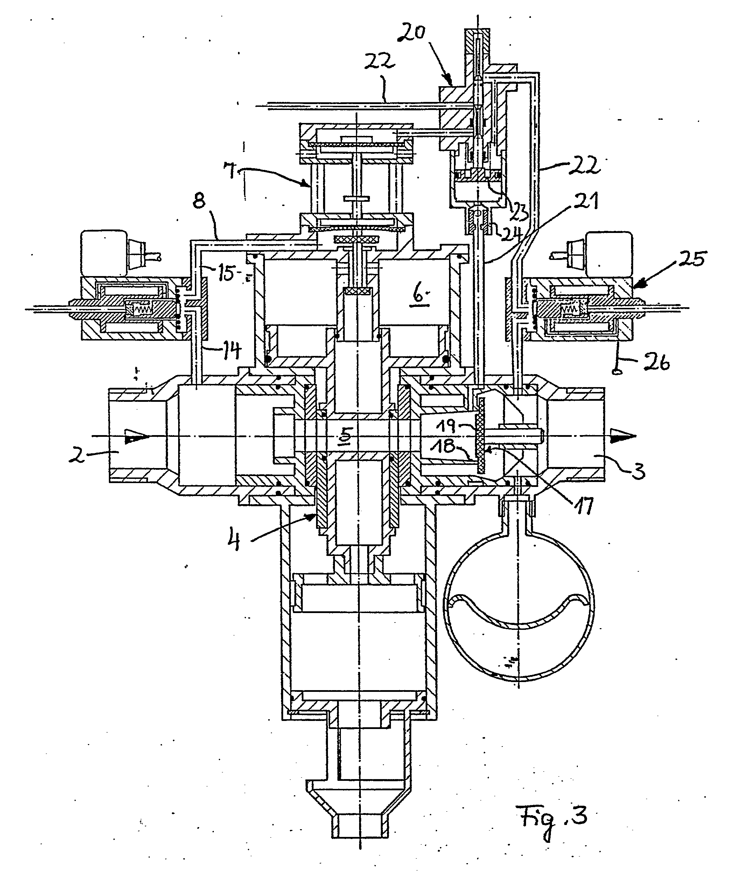

Fig. 3 eine abgewandelte Ausführungsform.

Der Rohrtrenner 1 weist einen mit einem Rohr verbindbaren Eingang 2 und einen mit einem Rohr verbindbaren Ausgang 3 auf.

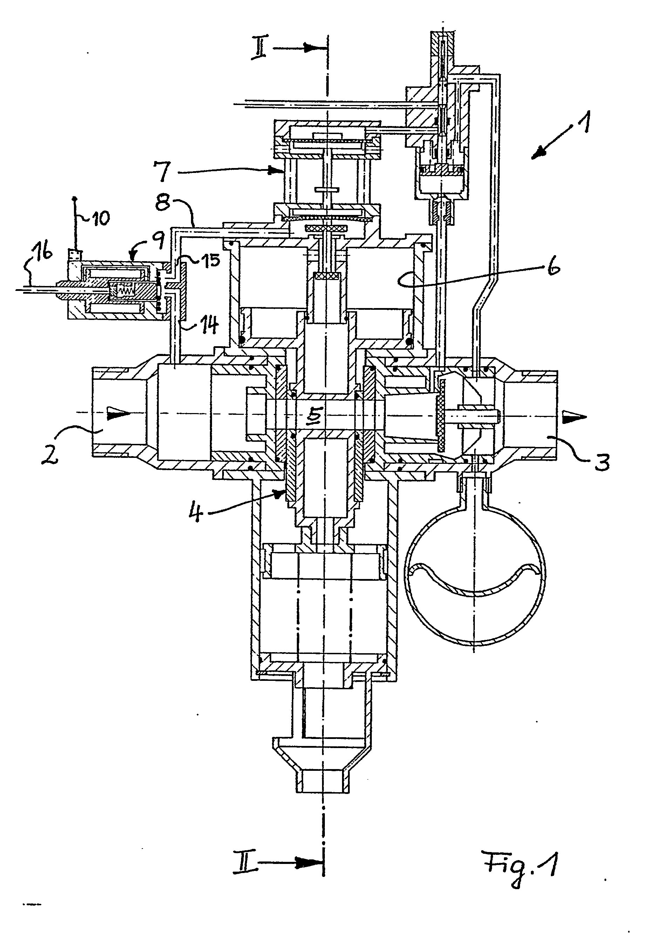

Zwischen Eingang 2 und Ausgang 3 ist eine Sperreinrichtung 4 in Form eines Schiebers mit einem Verbindungskanal 5 vorgesehen. Die Sperreinrichtung verbindet in der gezeigten Stellung Eingang 2 und Ausgang 3, während sie in einer zweiten, nicht gezeigten Stellung, in der der Schieber quer zu dem Verbindungskanal verschoben ist, Eingang und Ausgang voneinander trennt. Der Schieber reicht mit seinem einen Ende in einen Zylinder 6, in dem er als Kolben in Abhängigkeit von dem im Zylinder herrschenden Druck hin- und hergleiten kann. Das Innere des Zylinders 6 ist über ein Steuerventil 7 und eine Verbindungsleitung 8 mit dem Eingang 2 verbindbar. Das Steuerventil ist so ausgebildet, daß sich der Rohrtrenner im Betrieb zunächst in der in Figur 1 gezeigten Durchflußstellung befindet. Der Eingang 2 wird mit einem flüssigen Medium beaufschlagt, welches durch den Verbindungskanal 5 und den Ausgang 3 zu einem Verbraucher fließt. Übersteigt der am Eingang 1 bzw. der an dem Steuerventil über die Leitung 8 anliegende Druck den ausgangsseitig herrschenden Druck um ein vorgegebenes Maß, dann befindet sich das Steuerventil in der in der Figur 1 gezeigten Stellung. Unterschreitet der am Eingang 2 herrschende Druck relativ den am Ausgang 3 herrschenden Druck um ein vorbestimmtes Maß, dann bewirkt das Steuerventil, daß der Schieber in die Sperrstellung bewegt wird.

In der Verbindungsleitung 8 ist ein als 3/2-Wege-Ventil ausgebildetes Magnetventil 9 vorgesehen, welches im Normalzustand über Eingang 14 den Wasserdruck auf den Ausgang 15 frei durchläßt. Dieser Zustand ist ständig geschaltet. Wird nun an der über die Leitung 10 mit dem Ventil verbundenen ständigen Überwachungseinrichtung (zentrale Leitstelle) das Magnetventil 9 zum Prüfen betätigt, dann wird der Eingang 14 geschlossen. Der Ausgang 15 und eine Entlastungsleitung 16 sind dann geöffnet. Über die Entlastungsleitung 16 fällt der Wasserdruck auf den Kolben 6 ab, und die Sperreinrichtung 4 geht aufgrund einer Federvorspannung in Trennstellung. Nach Abschalten des Testsignales und damit Rückstellen des Magnetventils in seinen Normalzustand wird das Steuerventil 7 wieder mit dem Eingangsdruck beaufschlagt, und der Rohrtrenner geht wieder in die gezeigte Stellung zurück.

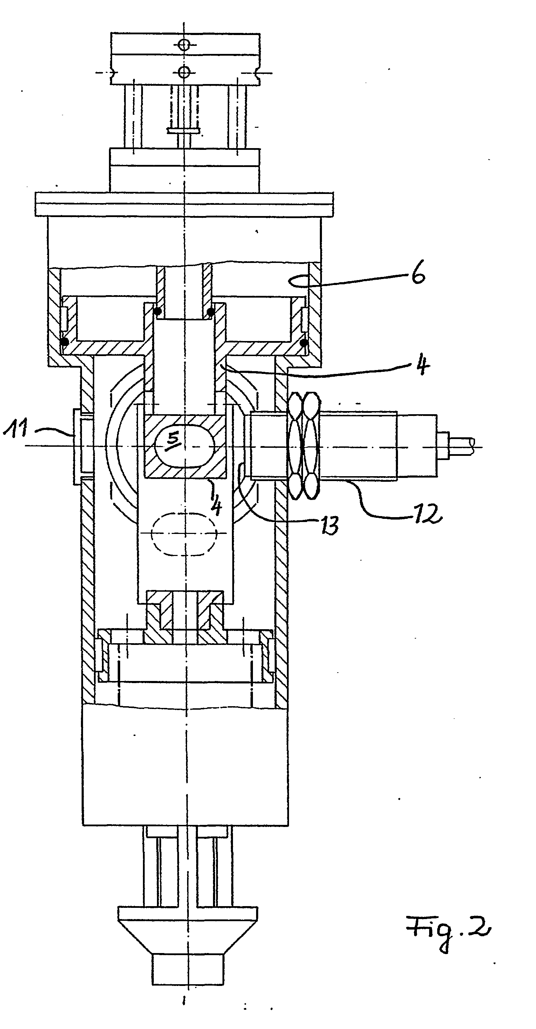

Wie aus der in Figur 2 gezeigten Darstellung ersichtlich ist, ist in Höhe des Verbindungskanales 5 in bekannter Weise ein Durchsichtfenster 11 vorgesehen, durch welches die Funktionsweise des Schiebers visuell beobachtet werden kann. Auf der gegenüberliegenden Wandung ist in das Gehäuse ein Sensor 12 in Form eines Näherungsschalters eingeschraubt. Der Näherungsschalter kann je nach Art des den Schieber bildenden Materials als induktiver oder kapazitiver Näherungsschalter ausgebildet sein. Der Abstand des Kopfes 13 des Näherungsschalters von der abzutastenden Sperreinrichtung 4 ist in Abhängigkeit von der Art des Näherungsschalters gewählt. Der Näherungsschalter ist in seiner Ansprechhöhe so eingesetzt, daß er genau dann anspricht, wenn die Sperreinrichtung aus der geöffneten Stellung in die Schließstellung bewegt ist. Gewünschtenfalls kann die Einstellung auch so erfolgen, daß der Näherungsschalter anspricht, wenn die Trennung um ein Mindestmaß erfolgt ist.

Der Näherungsschalter ist mit einer herkömmlichen Spannungsversorgung verbunden. Das Ausgangssignal des Näherungsschalters wird einem nicht gezeigten Zusatzschaltkasten der Überwachungseinrichtung zugeführt, so daß die Betriebszustandsmeldung potential frei an eine zentrale Überwachungsstelle bzw. zentrale Leittechnikstelle weitergegeben werden kann. Auf diese Weise kann sowohl die Durchflußstellung als auch die Trennstellung an der im Überwachungsort angezeigt werden.

Mit der oben beschriebenen Erfindung wird erreicht, daß die Stellung der Sperreinrichtung 4 direkt über den Sensor 12 abgegriffen werden kann, während bei bisherigen Lösungen lediglich ein druckloser Zustand simuliert und gemeldet wurde.

Ausgangsseitig ist ein Sperrventil 17 mit Ventilsitz 18 und Ventilteller 19 vorgesehen, welches in einer den Strom von dem Eingang zum Ausgang sperrende Stellung federvorgespannt ist. Ferner ist ein 2/3-Wegeventil 20 vorgesehen. Dieses ist über eine Leitung 21 mit der Eingangsseite des Sperrventiles 17 und über eine Leitung 22 mit der Ausgangsseite desselben verbunden. Das Ventil 20 ist so ausgebildet, daß es bei geschlossenem Sperrventil 17 in einer Stellung die Eingangsseite des Sperrventiles 17 mit dem Ausgang 3 des Rohrtellers verbindet.

Das als Druckvergleichsventil ausgebildete Steuerventil 7 ist so ausgebildet und mit dem Ventil 20 verbunden, daß es in einem Betriebszustand auf einer ersten Seite mit dem am Eingang 2 herrschenden Druck und auf seiner zweiten Seite über das Ventil 20 mit dem am Ausgang 3 herrschenden Druck beaufschlagt wird. Das Ventil 20 ist so ausgebildet, daß es in einer Ventilstellung die zweite Seite des Druckvergleichsventiles 7 mit dem am Ausgang 3 herrschenden Druck und in einer zweiten Stellung über eine Leitung 22 mit Atmosphäre beaufschlagt. Das Ventil 20 ist als Zeitverzögerungsglied ausgebildet. Der Ventilkörper 23 weist einen eine Drosselwirkung aufweisenden Durchgang zwischen seinen beiden gegenüberliegenden Seiten auf. Zwischen dem Ventilkörper 23 und der zugehörigen Eingangsseite ist ein Rückschlagventil 24 vorgesehen.

In die Leitung 22 ist ein 3/2-Weg-Magnetventil 25 vorgesehen, welches im betriebslosen Zustand ständig in Durchflußstellung geschaltet ist.

Damit der Rohrtrenner auch dann auf seine Funktionsfähigkeit überprüfbar ist, wenn er sich in Trennstellung befindet, kann das Ventil über eine über die Leitung 10 mit dem Ventil verbundene ständige Überwachungseinrichtung (Zentrale Leitstelle) das Magnetventil 20 zum Prüfen betätigt werden. Dadurch wird ein Durchfluß simuliert, bei dem das Sperrventil 17 in geöffneter Stellung wäre. In diese Stellung bewegt die Steuerung 7 die Sperreinrichtung 4 sofort in die Durchflußstellung. Sobald das Signal an der Leitung 26 abgeschaltet wird, geht die Sperreinrichtung in die Ausgangsstellung zurück. Die Bewegung bzw. dadurch erreichte jeweilige Stellung der Sperreinrichtung 4 wird wie bei der bereits oben beschriebenen Ausführungsform mit der Überwachungseinrichtung bzw. Funktionsanzeigeeinrichtung erfaßt und angezeigt. Dabei können das Magnetventil 9 und das Magnetventil 25 gleichzeitig vorhanden sein, damit auf diese Weise der Rohrtrenner in geöffnetem und/oder in geschlossenem Zustand überwacht werden kann. Es kann aber auch jeweils nur eines der beiden Ventile vorgesehen sein, wobei dann allerdings eine Überwachung nur im geöffneten oder im geschlossenen Zustand möglich ist.

## Patentansprüche

1. Rohrtrenner (1) zum Verhindern des Rückflusses in einer Fluidleitung, mit einer Sperreinrichtung (4), die in einer ersten Stellung einen Eingang (2) mit einem Ausgang (3) des Rohrtrenners verbindet und in einer zweiten Stellung den Eingang (2) von dem Ausgang (3) abtrennt, und mit einer den Rohrtrenner (1) zur Durchführung der Funktionsprüfung in Trennstellung schaltenden Schalteinrichtung (9), dadurch gekennzeichnet, daß ein Steuerventil (7) zum Steuern der Sperreinrichtung (4) vorgesehen ist, welches über eine Leitung (8) mit dem Eingang verbunden ist, daß die Schalteinrichtung (9) zur Funktionsprüfung das Steuerventil (7) von dem Eingang (2) abtrennt, und daß zur Überwachung der Funktion der Sperreinrichtung (4) ein die Stellung der Sperreinrichtung (4) abtastender Sensor (12) vorgesehen ist und dieser ausgangsseitig mit einer Überwachungseinrichtung bzw. einer Funktionsanzeigeeinrichtung verbunden ist.

2. Rohrtrenner (1) zum Verhindern des Rückflusses in einer Fluidleitung mit einer Sperreinrichtung (4), die in einer ersten Stellung einen Eingang (2) mit einem Ausgang (3) des Rohrtrenners verbindet und in einer zweiten Stellung den Eingang (2) von dem Ausgang (3) abtrennt, sowie mit einem in eine den Strom von dem Eingang (2) zum Ausgang (3) sperrende Stellung vorgespannten Sperrventil (17), dadurch gekennzeichnet, daß ein Ventil (20) vorgesehen ist, welches bei geschlossenem Sperrventil (17) in einer Stellung, die Eingangsseite des Sperrventils (17) mit dem Ausgang (3) des Rohrtrenners verbindet und das über eine Leitung (22), in der eine Schalteinrichtung (25) zur Funktionsprüfung vorgesehen ist, mit dem Ausgang (3) verbunden ist, und daß zur Überwachung der Funktion der Sperreinrichtung (4) eine die Stellung der Sperreinrichtung (4) abtastender Sensor (12) vorgezehen ist und dieser ausgangsseitig mit einer Überwachungseinrichtung bzw. einer Funktionsanzeigeeinrichtung verbunden ist.

3. Rohrtrenner nach Anspruch 2, dadurch gekennzeichnet, daß bei geschlossenem Rohrtrenner zur Funktionsprüfung das Ventil (20) einen Durchfluß simuliert, wodurch die Sperreinrichtung (4) während des Simulierens in Durchflußstellung gebracht wird.

4. Rohrtrenner nach Anspruch 2 oder 3, dadurch gekennzeichnet, daß ein Steuerventil (7) zum Schalten der Sperreinrichtung (4) vorgesehen ist, welches als Druckvergleichsventil ausgebildet und mit dem Ventil (20) derart verbunden ist, daß es in einem Betriebszustand auf einer ersten Seite mit dem am Eingang (2) herrschenden Druck und auf seiner zweiten Seite über das Ventil (20) mit dem am Ausgang (3) herrschenden Druck beaufschlagt wird.

5. Rohrtrenner nach Anspruch 4, dadurch gekennzeichnet, daß das Ventil (20) so ausgebildet ist, daß es in einer Ventilstellung die zweite Seite des Druckvergleichsventiles (7) mit dem am Ausgang (3) herrschenden Druck und in einer zweiten Stellung über eine Leitung (22) mit Atmosphäre beaufschlagt.

6. Rohrtrenner nach einem der Ansprüche 2 bis 5, dadurch gekennzeichnet, daß das Ventil (20) als Zeitverzögerungsglied ausgebildet ist.

7. Rohrtrenner nach einem der Ansprüche 1 bis 6, dadurch gekennzeichnet, daß der Sensor (12) ein induktiver Näherungsschalter ist.

8. Rohrtrenner nach einem der Ansprüche 1 bis 6, dadurch gekennzeichnet, daß der Sensor (12) ein kapazitiver Näherungsschalter ist.

## Revendications

1. Disconnecteur de conduite (1) pour empêcher le reflux dans une conduite de fluide, comportant un dispositif d'arrêt (4) qui, dans une première position, relie une.entrée (2) à une sortie (3) du disconnecteur de conduite et, dans une deuxième position, sépare l'entrée (2) de la sortie (3), et un dispositif de commutation (9) mettant en circuit le disconnecteur de conduite (1) pour la réalisation de l'essai de fonctionnement en position de rupture, caractérisé par le fait qu'il est prévu une vanne-pilote (7) pour la commande du dispositif d'arrêt (4), laquelle est reliée à l'entrée par l'intermédiaire d'une conduite (8), que le dispositif de commutation (9) pour l'essai de fonctionnement sépare la vanne-pilote (7) de l'entrée (2), et que, pour la surveillance du fonctionnement du dispositif d'arrêt (4), il est prévu un capteur (12) analysant la position du dispositif d'arrêt (4) et celui-ci est relié, du côté de la sortie, à un dispositif de surveillance ou à un dispositif d'indication de fonctionnement.

2. Disconnecteur de conduite (1) pour empêcher le reflux dans une conduite de fluide, comportant un dispositif d'arrêt (4) qui, dans une première position, relie une entrée (2) à une sortie (3) du disconnecteur de conduite et, dans une deuxième position, sépare l'entrée (2) de la sortie (3), de même qu'une soupape d'arrêt (17) précontrainte dans une position arrêtant le courant de l'entrée (2) vers la sortie (3), caractérisé par le fait qu'il est prévu une soupape (20) qui, en cas de fermeture de la soupape d'arrêt (17) relie, dans une position, le côté d'entrée de la soupape d'arrêt (17) à la sortie (3) du disconnecteur de conduite, et qui, par l'intermédiaire d'une conduite (22), dans laquelle est prévu un dispositif de commutation (25) pour l'essai de fonctionnement, est reliée à la sortie (3), et que, pour la surveillance du fonctionnement du dispositif d'arrêt (4), est prévu un capteur (12) analysant la position du dispositif d'arrêt (4) et celui-ci est relié, du côté de la sortie, à un dispositif de surveillance ou à un dispositif d'indication de fonctionnement.

3. Disconnecteur de conduite selon la revendication 2, caractérisé par le fait qu'en cas de fermeture du disconnecteur de conduite pour l'essai de fonctionnement, la soupape (20) simule une circulation, ce par quoi le dispositif d'arrêt (4) est amené en position de circulation pendant la simulation.

4. Disconnecteur de conduite selon l'une des revendications 2 ou 3, caractérisé par le fait qu'une vanne-pilote (7) est prévue pour la mise en circuit du dispositif d'arrêt (4), laquelle est réalisée sous la forme d'une soupape à différentiel de pression et est reliée à la soupape (20) de sorte qu'elle est alimentée, dans un état de fonctionnement, d'un premier côté, par la pression régnant à l'entrée (2) et, de son deuxième côté, par l'intermédiaire de la soupape (20), par la pression régnant à la sortie (3).

5. Disconnecteur de conduite selon la revendication 4, caractérisé par le fait que la soupape (20) est réalisée de sorte qu'elle alimente, dans une position de soupape, le deuxième côté de la soupape à différentiel de pression (7) par la pression régnant à la sortie (3) et, dans une deuxième position, par l'intermédiaire d'une conduite (22), par l'atmosphère.

6. Disconnecteur de conduite selon l'une des revendications 2 à 5, caractérisé par le fait que la soupape (20) est réalisée sous la forme d'un élément de retard de temps.

7. Disconnecteur de conduite selon l'une des revendications 1 à 6, caractérisé par le fait que le capteur est un détecteur de proximité inductif.

8. Disconnecteur de conduite selon l'une des revendications 1 à 6, caractérisé par le fait que le capteur est un détecteur de proximité capacitif.

## Claims

1. A tube disconnector (1) for preventing back flow in a fluid line, comprising a blocking device (4), connecting in a first position an input (2) to an output (3) of the tube disconnector and seperating in a second position said input (2) from said output (3), and switching means (9) switching said tube disconnector (1) into separating position for performing the functional check, characterized in that a control valve (7) is provided for controlling said blocking device (4), being connected through a line (8) with said input, in that said switching means (9) separates said control valve (7) from said input (2) for functional checking, and in that a sensor (12) is provided sensing the position of said blocking device (4) for checking the function of said blocking device (4) said sensor (12) being connected at the exit thereof to monitoring means or function indicating means.

2. A tube disconnector (2) for preventing back flow in a fluid line, comprising a blocking device (4) connecting in a first position an input (2) to an output (3) of the tube disconnector and separating in a second position said input (2) from said output (3), as well as a lock valve (17) biased into a position blocking the stream from said input (2) to said output (3), characterized in that a valve (20) is provided, connecting in a position with closed lock valve (20) the input side of the lock valve (17) to the output (3) of the tube disconnector and connected to the output (3) through a line (22), in which switching means (25) for functional check is provided, and in that for monitoring the function of the blocking device (4) a sensor (12) is provided sensing the position of the blocking device (4), said sensor (12) being connected at the exit side thereof to monitoring means or function indicating means.

3. The tube disconnector according to claim 1, characterized in that with closed tube disconnector said valve (20) simulates a through flow for functional check, whereby said blocking device (4) is brought in through flow position during simulation.

4. The tube disconnector according to claim 2 or 3, characterized in that a control valve (7) is provided for switching said blocking device (4), said control valve (7) being formed as pressure compensating valve and connected to said valve (20) such that during an operation mode the pressure prevailing at the input (2) is applied to a first side and the pressure prevailing at the output (3) is applied to its second side through the valve (20).

5. The tube disconnector according to claim 5, characterized in that said valve (20) is formed such that it applies in one valve position the pressure prevailing at said output (3) to the second side of the pressure compensating valve (7) and applies in a second position atmospheric pressure through a line (22).

6. The tube disconnector according to one of claims 1 to 5, characterized in that said valve (20) is formed as a time delay member.

7. The tube disconnector according to one of claims 1 to 6, characterized in that said sensor (2) is an inductive proximity switch.

8. The tube disconnector according to one of claims 1 to 6, characterized in that said sensor (12) is a capacitive proximity switch.

Fig.1

Fig.2

Fig.3